# EUROPEAN PATENT APPLICATION

(11) **EP 1 933 093 A1**
(43) Date of publication of application: **18.06.2008**
(21) Application number: 07020588.5
(22) Date of filing: 22.10.2007
(51) Int. Cl.: F24B 1/08, F24B 1/185, F24B 5/04, F23B 40/08, F23B 80/00

(54) **Stove, particularly fuelable with pellets, woodchips, cereals, corn, vegetable-derived fuels, biomass and the like**

(30) Priority: 15.12.2006 IT VR20060194
(71) Applicant: COLA S.R.L., 37040 Arcole (VR) (IT)
(72) Inventor: Ferroli, Dante, 37032 Monteforte D'Alpone (Prov. of Verona) (IT)
(74) Representative: Alagem Modiano, Lara S.

(57) **Abstract**

A stove (1) comprising an outer enclosure (2), which defines a combustion chamber (6) which is associated with a fuel containment tank (7) and is provided with means (8) for feeding the fuel to a brazier arranged within the combustion chamber (6). Means (10) are also provided for extracting air from the combustion chamber (6). A heat exchange interspace (11) is defined between the combustion chamber (6) and the outer enclosure (2) and has a fluid connection, by means of air intakes (12) and delivery ports (13), to the environment in which the stove is placed. Air movement means (14) which are adapted to draw by force the air from the air intakes (12) in order to send it toward the delivery ports (13) are accommodated within the interspace (11). According to the invention, the movement means (14) are arranged at a containment portion (15) which is arranged below the combustion chamber (6).

## Description

The present invention relates to a stove and in particular to a stove which can be fueled with pellets, woodchips, cereals, corn, vegetable-derived fuels, biomasses and the like.

Stoves are commercially available which are composed of an external frame inside which, at the front, there is a combustion chamber, behind which there is a tank for containing the fuel, from the base of which a screw feeder draws the fuel, for example the pellets, in order to feed it to the combustion brazier.

In some cases, the containment tank can be arranged laterally to the combustion chamber or can be arranged remotely with respect to the chamber.

The combustion brazier is supported by a brazier holder, which is connected, by means of an inlet, to an air supply duct which ends at an intake for drawing air from outside.

In practice, as a consequence of the partial vacuum provided in the combustion chamber due to the actuation of extraction means, the air required for combustion is drawn from outside through the supply duct.

Between the external frame and the combustion chamber there is a heat exchange interspace which has a fluid connection to the outside of the stove by means of air intakes and delivery ports formed at said external frame.

At the back of the external frame, and usually below the containment tank, typically there is a tangential fan, which is designed to draw air from the air intakes, usually arranged at a lower portion of the external frame, and to propel said air toward the delivery ports, making it strike the internal walls of the combustion chamber so as to heat the aspirated air.

Although these stoves are widely used, they are not devoid of drawbacks.

First of all, it has in fact been observed that the arrangement of the tangential fan designed to move the air in the heat exchange interspace proximate to the back of the external frame does not facilitate the flow of air from the lower air intakes to the upper delivery ports.

In particular, it has been found that stationary air pockets often form, especially at the regions proximate to the front opening hatch.

The aim of the present invention is to provide a stove which is capable of eliminating, or at least reducing drastically, the drawbacks noted above in currently commercially available stoves.

Within this aim, an object of the present invention is to provide a stove which allows to limit the formation of stationary air pockets within the heat exchange interspace.

Another object of the present invention is to provide a stove which can offer better operating efficiency.

Still another object of the invention is to provide a stove which has a simple structure, is highly durable and has a competitive production cost, so that its use is advantageous also from an economical standpoint.

This aim and these and other objects, which will become better apparent hereinafter, are achieved by a stove which comprises an outer enclosure, which defines a combustion chamber which is associated with a fuel containment tank and is provided with means for feeding the fuel to a brazier arranged within the combustion chamber and means for extracting the air from the combustion chamber, a heat exchange interspace being defined between the combustion chamber and the outer enclosure and having a fluid connection, by means of air intakes and delivery ports, to the environment in which the stove is placed, the interspace accommodating air movement means which are adapted to draw by force the air from the air intakes in order to send it toward the delivery ports, characterized in that the movement means are arranged at a containment portion which is arranged below the combustion chamber.

Further characteristics and advantages of the invention will become better apparent from the description of some preferred but not exclusive embodiments of a stove according to the present invention, illustrated by way of non-limiting example in the accompanying drawings, wherein:

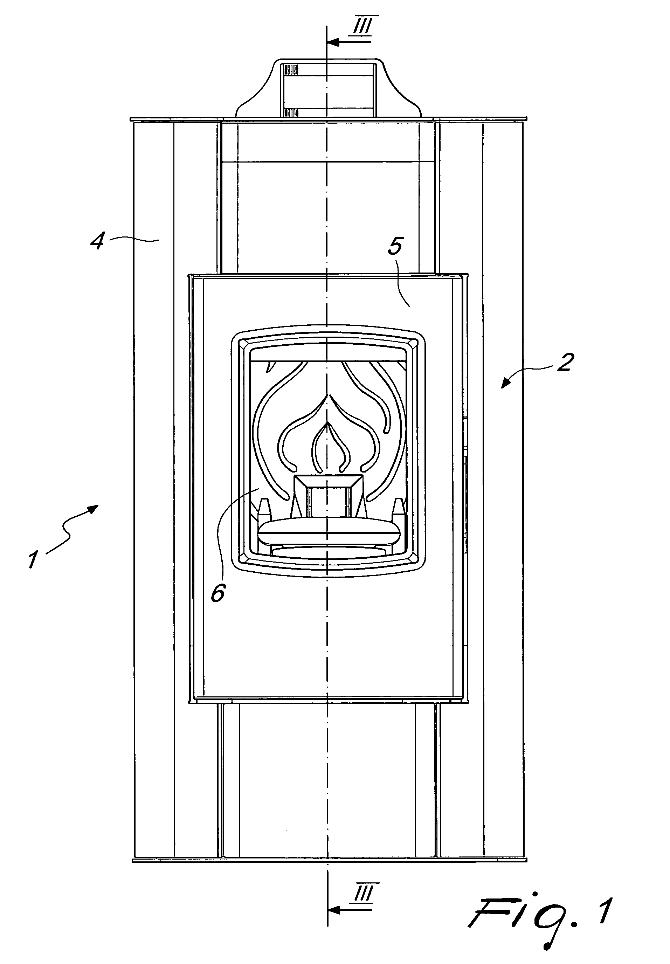

Figure 1 is a front elevation view of the stove according to the invention;

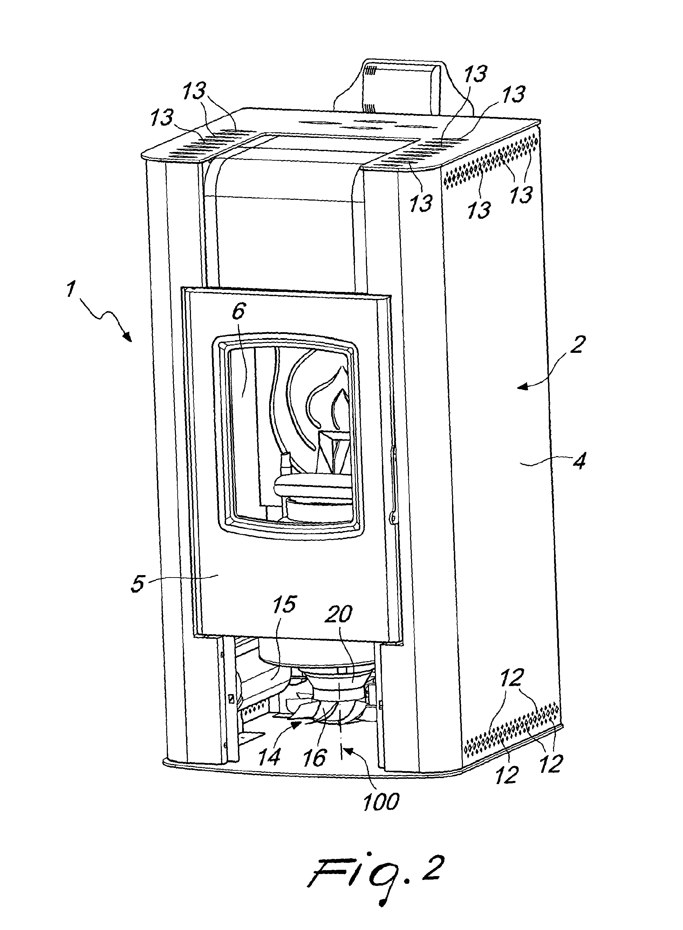

Figure 2 is a perspective view of the stove of Figure 1, in which a lower portion of the outer enclosure is omitted for the sake of greater clarity;

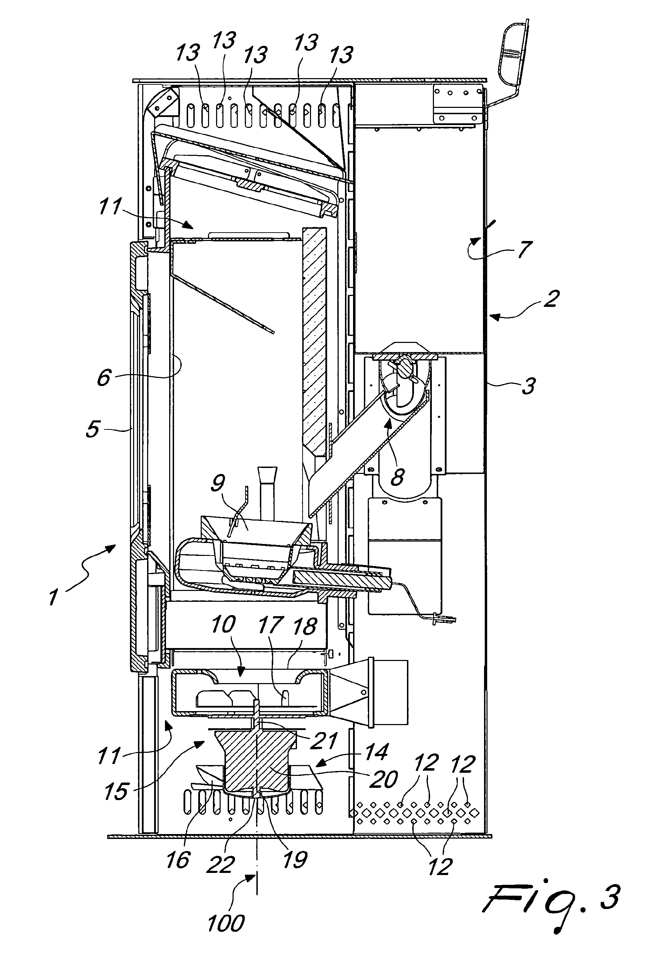

Figure 3 is a sectional view of the stove, taken along the plane III-III of Figure 1;

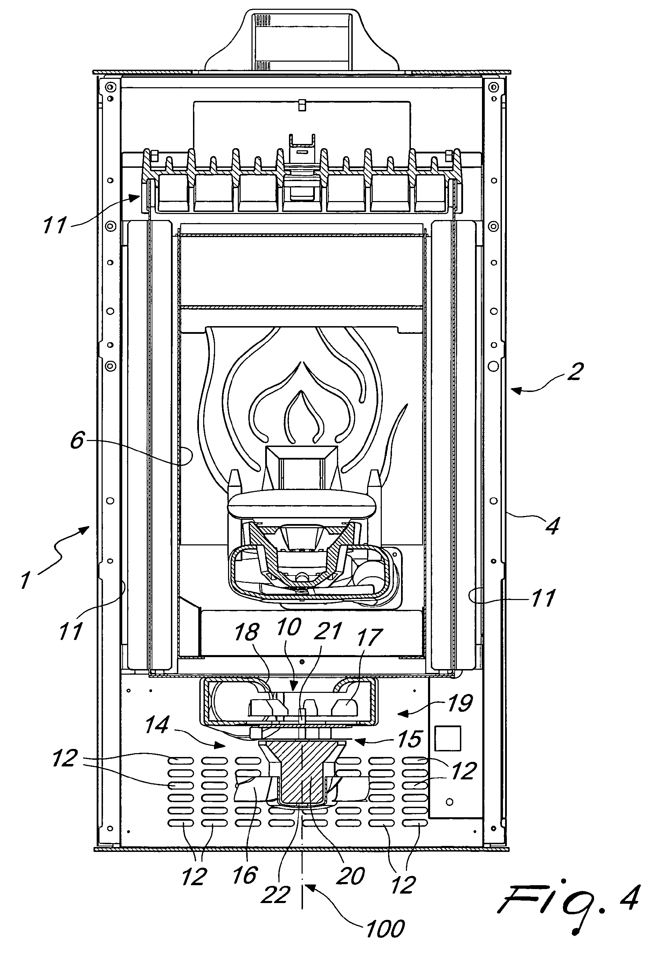

Figure 4 is a sectional view of the stove, taken along a plane which is substantially perpendicular to the plane of the sectional view of Figure 3.

In the exemplary embodiments that follow, individual characteristics, given in relation to specific embodiments, may actually be interchanged with other different characteristics that exist in other exemplary embodiments.

Moreover, it is noted that anything found to be already known during the patenting process is understood not to be claimed and to be the subject of a disclaimer.

With reference to the figures, the present invention relates to a stove 1 which can be fueled with pellets, woodchips, cereals, corn, vegetable-derived fuels, biomass and the like.

The stove 1 comprises an outer enclosure 2, which is generally constituted by a back 3, by a lateral containment region 4, and by a front hatch 5 which is typically at least partially transparent.

Within the enclosure 2, and particularly in a region which is adjacent to the front panel 5, there is a combustion chamber 6, which is associated with a fuel containment tank 7.

Feeder means, such as for example a screw feeder 8, draw the fuel, for example the pellets, from the base of the containment tank 7 in order to feed it to a brazier 9.

The containment tank 7 can be arranged, as in the embodiment shown in the figures, to the rear of the combustion chamber 6. However, there is nothing to prevent it from being arranged laterally with respect to the combustion chamber 6 or remotely, i.e., outside the outer enclosure 2.

Moreover, the stove 1 is provided with means 10 for extracting the air from the combustion chamber 6.

A heat exchange interspace 11 is defined between the combustion chamber 6 and the outer enclosure 2 and has a fluid connection, by means of air intakes 12 and delivery ports 13, to the environment in which the stove 1 is arranged.

Air movement means 14 are accommodated within the interspace 11 and are adapted to draw by force air from the air intakes 12 to send it toward the delivery ports 13.

This movement causes the aspirated air to strike the walls of the combustion chamber 6 so that the air in output from the delivery ports 13 is much warmer than the air that is drawn through the air intakes 12.

According to the present invention, the movement means 14 are arranged at a containment portion 15 which is arranged below the combustion chamber 6.

Advantageously, air movement means 14 can be constituted by an axial fan 16 whose rotation axis 100 lies, during use, along a substantially vertical direction.

With particular reference to the practical exemplary embodiment shown in the figures, the extraction means 10 can be constituted by an axial impeller 17, which has a substantially vertical axis and is arranged at the base 18 of the combustion chamber 6.

Conveniently, the air movement means 14 are arranged below the axial impeller 17.

According to an important aspect of the present invention, the movement means 14 comprise a movement shaft 19, which can be actuated by motor means 20 associated with the extraction means 10.

For example, the motor means 20 can comprise a first terminal 21, which is associated with the axial impeller 17, and a second terminal 22, which is associated with the axial fan 16.

Advantageously, the first terminal 21 and the second terminal 22 can be part of a through actuation shaft which is associated with the motor means 20.

As shown in the figures, the air intakes 12 can be arranged substantially at the level of the axial fan 16.

Operation of a stove according to the invention is evident from what has been described above.

In particular, it has been found that thanks to the presence of the air movement means below the combustion chamber the flow of air from the air intakes toward the delivery ports is extremely effective, since in practice stationary air pockets capable of reducing heat exchange cannot form.

Moreover, the axial fan arranged below the combustion chamber allows to generate a sort of overpressure which allows a more effective flow of the air from the air intakes toward the delivery ports.

Finally, the keying of the axial fan on the same motor means designed to actuate the extraction means has allowed to eliminate an actuation motor and the corresponding controls, with an evident cost saving and a simplification at the design and construction level.

All the characteristics of the invention indicated above as advantageous, convenient and the like may also be omitted or be replaced with equivalents.

The invention thus conceived is susceptible of numerous modifications and variations, all of which are within the scope of the appended claims.

It is possible, in this regard, also to associate with the stove 1 combined inserts provided with a food warmer or with cooking ovens. Moreover, the combustion chamber can be of the dry type but also of the wet type.

In practice it has been found that the invention has achieved the intended aim and objects in all of its embodiments.

In practice, the materials used, as well as the contingent shapes and dimensions, may be any according to requirements.

All the details may further be replaced with other technically equivalent elements.

The disclosures in Italian Patent Application No. VR2006A000194 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A stove comprising an outer enclosure, which defines a combustion chamber which is associated with a fuel containment tank and is provided with means for feeding said fuel to a brazier arranged within said combustion chamber and means for extracting the air from said combustion chamber, a heat exchange interspace being defined between said combustion chamber and said outer enclosure and having a fluid connection, by means of air intakes and delivery ports, to the environment in which said stove is placed, said interspace accommodating air movement means which are adapted to draw by force the air from said air intakes in order to send it toward said delivery ports, **characterized in that** said movement means are arranged at a containment portion which is arranged below said combustion chamber.

2. The stove according to claim 1, **characterized in that** said air movement means comprise an axial fan whose rotation axis lies, during use, along a substantially vertical direction.

3. The stove according to one or more of the preceding claims, **characterized in that** said extraction means comprise an axial impeller which has a substantially vertical axis and is arranged at the base of said combustion chamber, said air movement means being arranged below said axial impeller.

4. The stove according to one or more of the preceding claims, **characterized in that** said movement means comprise a movement shaft which can be actuated by motor means which are associated with said extraction means.

5. The stove according to one or more of the preceding claims, **characterized in that** said motor means comprise a first terminal, which is associated with said axial impeller, and a second terminal, which is associated with said axial fan.

6. The stove according to one or more of the preceding claims,
**characterized in that** said first terminal and said second terminal are part of a through actuation shaft which is associated with said motor means.

7. The stove according to one or more of the preceding claims, **characterized in that** said air intakes are arranged substantially at the level of said axial fan.
